# EUROPEAN PATENT APPLICATION

(11) **EP 4 851 245 A1**
(43) Date of publication of application: **09.12.2026**
(21) Application number: 26174358.7
(22) Date of filing: 24.04.2026
(51) Int. Cl.: C08L 23/04

(54) **FILLER COMPOSITION FOR POLYMER MATRIX COMPOSITE SYSTEMS**

(30) Priority: 03.06.2025 TR 2025007331
(71) Applicant: Kuzey Boru Anonim Sirketi, 68100 Aksaray (TR)
(72) Inventor: KAYA, Bahadir, 68100 Aksaray (TR)
(74) Representative: Kordinat lnovasyon Ve Fikri Mülkiyet Yonetimi Ltd. Sti

(57) **Abstract**

The invention relates to a filler material for use in polymer-based composite systems, comprising calcite and talc as inorganic reinforcing components, polyethylene (PE) as a carrier resin, and a polyolefin elastomer (POE) as a modifier. The filler material is in the form of solid granules produced by twin-screw extrusion to ensure homogeneous dispersion of all components.

The composition ensures stable processing and maintains mechanical integrity of the polymer matrix at high inorganic filler loadings. Shark-skin surface defects are effectively eliminated through the migration of ester-modified montan wax to the inorganic filler interfaces, driven by thermodynamic incompatibility with the polyethylene matrix, in combination with polyisobutylene (PIB) acting as a viscoelastic binder around dispersed filler particles.

The resulting filler is suitable for direct processing in single-screw extruders without additional compounding, achieving high mechanical properties and improved melt flow stability.

## Description

### Technical Field

The invention relates to a filler material for use in polymer-based materials. The filler material comprises polyethylene (PE) as the carrier resin, calcite and talc as reinforcing components, and a polyolefin elastomer (POE) as a modifier. The filler material is in the form of solid granules wherein the constituent components are homogeneously distributed.

### Background of Invention

Filler materials play an important role in the production of plastic materials and are used to reduce costs, improve mechanical properties, and maintain acceptable processability. In such materials, they also increase properties such as specific gravity, modulus of elasticity (E-modulus), compressive strength, flexural strength, hardness, and heat resistance.

Certain specific additives may also provide advantages such as antistatic and flame-retardant properties, as well as facilitate processing due to their softness and lubricity. One of the most important contributions of fillers in plastics is to improve dimensional stability by reducing material shrinkage.

In the plastics manufacturing industry, calcite (CaCO₃) is the most widely used filler material due to advantages such as relatively low cost, increased hardness and rigidity, and improved processability in production methods such as extrusion. Along with calcite, high-density polyethylene (HDPE), linear low-density polyethylene (LLDPE), or low-density polyethylene (LDPE) may be used as the carrier matrix. The composition ranges are approximately 40-85% by weight of calcite, 15-60% by weight of HDPE, LLDPE, or LDPE as the carrier matrix, and less than 3% by weight of processing additives such as lubricants and slip agents.

Various filler compounds for polymers have been proposed. US2008262126A1 discloses a method for producing a nanoclay masterbatch for thermoplastics, thermosets and elastomers. CN1948379B relates to a method of preparing UHMWPE (ultra high molecular weight polyethylene) - PP (polypropylene) composites and the use of inorganic fillers. EP3360918A1 discloses a method of producing a polymer nanocomposite masterbatch by adding inorganic materials such as calcite, talc and alumina. However, these documents do not disclose a filler composition comprising both talc and a polyolefin elastomer in a polyethylene carrier matrix for reducing surface defects and improving processing stability in extrusion-based polymer processing. In addition, the intentional migration of montan wax via a thermodynamic incompatibility mechanism, combined with the use of PIB, creates a highly effective lubricating layer during extrusion.

Although filler materials with this composition are already in use, they remain insufficient for certain applications. For example, in the plastic pipe industry, particularly in corrugated pipes, surface defects such as dullness, streaking, and defects commonly referred to as 'shark-skin' are observed.

Furthermore, increasing the calcite content reduces the ring flexibility of pipes that already exhibit low impact performance. This adversely affects the environmental resistance of plastic pipes. Pressure increases at the extruder head cause fluctuations during production, negatively impacting process stability. In addition, low melt flow results in sediment accumulation and contamination within the die. As a result, scratches are observed on both the inner and outer surfaces of the pipes.

All of these defects increase the scrap rate in pipe production, thereby reducing production efficiency. Accordingly, there is a need for a filler material that improves surface quality and process stability in pipe production.

### Object of Invention

The present invention provides a technical solution to surface quality limitations, processing instability, and insufficient mechanical properties in extrusion-based polymer processing. The technical problem addressed is the occurrence of melt fracture and 'shark-skin' surface defects in polyethylene products at high filler concentrations. Conventional calcite fillers often compromise surface smoothness and process stability under high-speed extrusion conditions.

The primary objective of the invention is to develop a granulated filler material comprising calcite, talc, PE as the carrier resin, and a polyolefin elastomer (POE) in optimal proportions, which eliminates surface defects during processing in polymer-based materials, while improving mechanical properties.

Another object of the invention is to utilize talc as an additive to increase lubricity during processing, thereby facilitating processability and achieving a consistent quality and smooth surface in the produced material. At the same time, it contributes to improvements in mechanical properties.

A further object of the invention is to select polyethylene as the carrier matrix phase to enhance compatibility in polyethylene-based polymer materials, thereby facilitating dispersion of the filler material within such systems.

Another object of the invention is to utilize a polyolefin elastomer (POE) to provide flexibility and processability, thereby preventing the formation of a hard and brittle structure caused by calcite and talc additives.

An object of the present invention is to provide a polymer composite incorporating erucamide, configured to undergo post-extrusion migration to develop a microscopic lubricating film on the inner and outer surfaces of the material. A further object of the present invention is to prevent melt fracture during the manufacturing process through this surface modification, thereby ensuring superior surface finish and processing stability. Additionally, the invention aims to minimize the coefficient of friction (COF) in the final product, thereby enhancing hydraulic flow properties while increasing wear resistance against abrasive forces.

The object of the present invention is to provide a polymer composite formulation comprising ester-modified montan wax to address the limitation of standard non-polar polyethylene waxes in wetting hydrophilic fillers such as calcite or talc. Specifically, the invention utilizes the polar carboxyl groups of the montan wax to form a film on the surface of the inorganic filler, thereby reducing interfacial tension between the phases. Consequently, a further object is to prevent agglomeration and ensure the homogeneous dispersion of the filler within the polymer matrix, resulting in a composite structure with improved mechanical and physical uniformity.

The object of the present invention is to utilize polyethylene (PE) wax as a rheology modifier, which has a low molecular weight, and therefore acts as an external lubricant by forming a protective film layer between the polymer melt and the metal surfaces of the processing equipment. This lubrication mechanism induces controlled wall slip within the extruder barrel, thereby preventing excessive shear stress and reducing the motor torque required for processing. Consequently, the invention facilitates high-speed extrusion of highly filled compounds without the risk of thermal degradation, while preserving material properties.

The object of the present invention is to incorporate polyisobutylene (PIB) into high-mineral-filled polymer formulations to overcome brittleness caused by restricted polymer chain mobility. Specifically, the invention utilizes the low glass transition temperature (Tg) and amorphous structure of PIB to act as a viscoelastic binder that encapsulates rigid mineral particles. This configuration enables dissipation of external impact energy, thereby preventing crack propagation and enhancing the toughness of the final material.

A further object of the invention is to enable stable production of plastic materials in single-screw extrusion systems.

Another object of the invention is to reduce scrap rates and improve production flexibility in corrugated plastic pipes by enabling the use of virgin polyethylene raw materials.

The structural and characteristic features of the invention, as well as its behavior in plastic pipes, are demonstrated by accredited test reports and academic expert reports, which are described in the following sections.

### Abbreviations

FT-IR: Fourier Transform Infrared Spectrometer
SEM: Scanning Electron Microscopy
EDX: Energy-Dispersive X-ray Spectroscopy
PE: Polyethylene
HDPE: High-density polyethylene
LDPE: Low-density polyethylene
LLDPE: Linear low-density polyethylene
POE: Polyolefin elastomer
MFI: Melt flow index
OIT: Oxygen Induction Time
TIR: True Impact Rate

### Brief Description of Drawings

Figure 1 shows an FT-IR spectrum of the filler material.
Figure 2 shows an SEM image illustrating the microstructure of the filler material.
Figure 3 shows an EDX spectrum and elemental distribution of the filler material.

### Detailed Description of the Invention

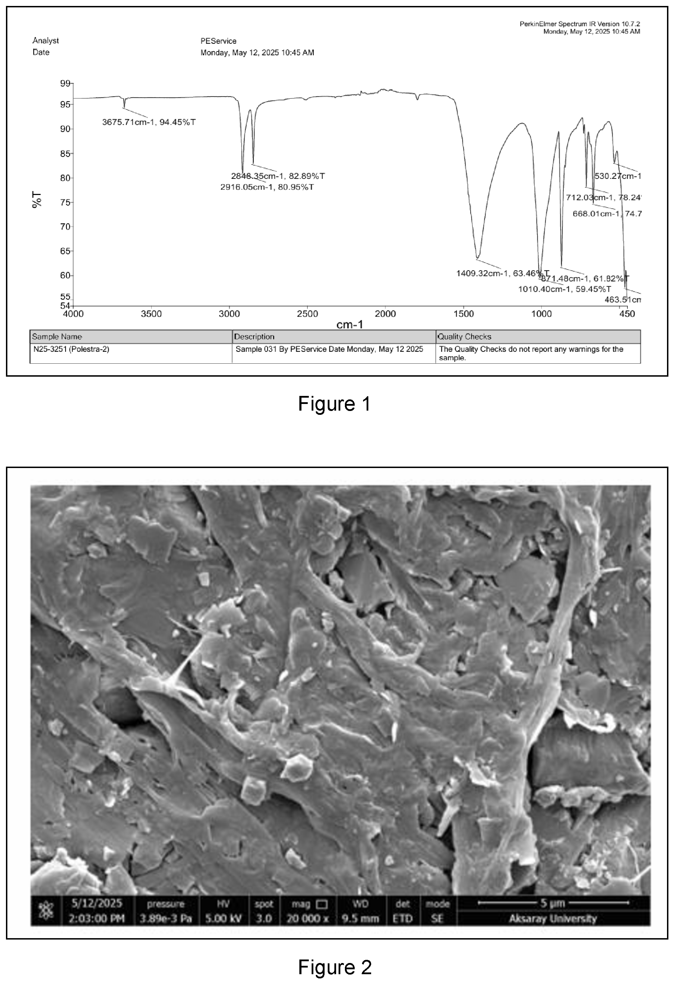

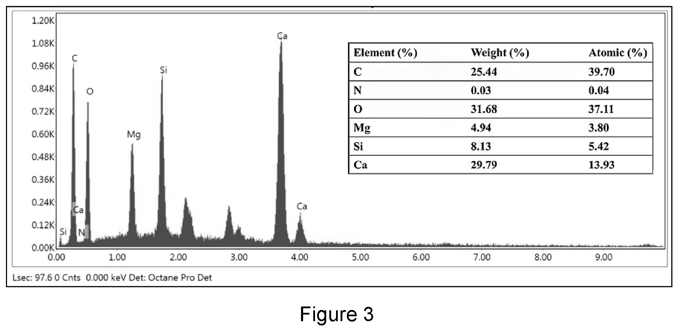

In the present detailed description, the structural and chemical composition of the filler material developed for use in polymeric materials is supported by FT-IR (Figure 1), SEM (Figure 2), and EDX (Figure 3) analyses.

The invention relates to the production of a uniformly mixed filler composition, in solid granules comprising calcite, talc, PE, a polyolefin elastomer (POE), and processing additives such as slip agents and auxiliary processing oils for use in polymer-based materials. The chemical composition of the developed filler material is presented in Table 1.

**Table 1. The chemical composition of the developed filler**

| **Component** | **Content (wt.%)** |
|---|---|
| Calcite | 30-70 |
| Talc | 10-40 |
| PE | 10-30 |
| POE | 0.1-10 |
| Lubricants | 0.1-3 |
| Auxiliary Processing Oils | 0.1-3 |
| **TOTAL** | **100** |

The filler material in granule form comprises calcite (CaCO₃) and talc (Mg₃Si₄O₁₀ (OH)₂), as reinforcing components, polyethylene (PE) as a carrier resin, and a polyolefin elastomer (POE) as a modifier. The composition further comprises erucamide as an internal lubricant, polyethylene (PE) wax-montan wax as external lubricants, and polyisobutylene (PIB) as an auxiliary processing oil.

Filler materials contribute positively to the properties of polymeric products, including hardness, mechanical strength, heat resistance, appearance, and chemical resistance.

Calcium carbonate is the most widely used filler component in polymer processing and is particularly suitable for extrusion applications. It provides resistance to crushing, friction, and scratching, and contributes to increased hardness.

Talc, a hydrated magnesium silicate having the structure Mg₃Si₄O₁₀(OH)₂, increases the heat resistance of polymers and reduces mold shrinkage. By improving lubricity during processing, it facilitates processability and contributes to a smooth surface morphology. In addition, it enhances mechanical properties and chemical resistance.

Polyethylene (PE), used as the carrier resin phase, provides a suitable matrix for use in ethylene-based polymer systems and facilitates compatibility within such materials.

Polyolefin elastomers (POE) are elastomeric materials that exhibit compatibility with thermoplastic polymers. They provide elasticity, strength, flexibility at low temperatures, and recyclability, thereby acting as stabilizing agents against brittleness induced by inorganic fillers such as calcite and talc.

The composite filler formulation was prepared using inorganic mineral fillers and a polyolefin-based carrier resin. Calcium carbonate (CaCO₃) (average particle size: 3.3 µm, purity: 99%) and talc (Mg₃Si₄O₁₀(OH)₂) (average particle size: 4.1 µm, lamellar structure, purity: 99-100%) were selected as primary fillers to increase stiffness and improve dimensional stability of the polymer matrix. Polyethylene (PE) (MFI: 1.2 g/10 min, density: 0.954 g/cm³) was used as the carrier resin. Polyolefin elastomer (POE) (MFI: 1.0 g/10 min, density: 0.868 g/cm³) was incorporated as an impact modifier.

Processing additives included erucamide (refined, melting point: 83 ± 5°C) as an internal slip agent, polyethylene (PE) wax (density: 0.96-0.98 g/cm³, drop point: 127-132°C) and esterified montan wax (drop point: 99-105°C, acid value<15 mg KOH/g) as external lubricants, and polyisobutylene (PIB) (density: 0.867 g/cm³ at 15°C) as an auxiliary processing oil. All raw materials were used without further purification.

The invention utilizes the thermodynamic incompatibility between the non-polar HDPE matrix and the polar ester-based montan wax to induce controlled phase separation. As a result, the montan wax migrates toward interfacial regions, where it functions as an external lubricant by reducing wall friction and as a wetting agent by coating the high-energy surfaces of the hydrophilic fillers (calcite and talc), thereby preventing agglomeration through steric hindrance.

In addition, the migrated montan wax layer at the inorganic filler interfaces counterbalances the inherent tackiness of the polyisobutylene (PIB), thereby preventing excessive particle-particle adhesion and enabling a stable and homogeneous dispersion within the polymer matrix.

This interfacial modification enables the simultaneous use of polyisobutylene (PIB), overcoming the conventional understanding that waxes and tackifiers act antagonistically. The montan wax ensures homogeneous dispersion of the fillers by neutralizing their surface energy, while PIB acts as a viscoelastic binder surrounding the dispersed particles, thereby dissipating impact energy and improving toughness without compromising the structural uniformity of the composite.

By configuring the composition with a talc-to-POE ratio in the range of 2:1 to 4:1, the die-head pressure is reduced, resulting in improved surface quality and enhanced mechanical properties.

The components of the filler material were blended using a pre-mixing method prior to extrusion until a homogeneous mixture was obtained. The mixture was then transferred to extrusion lines for granulation.

The filler masterbatch was produced using a co-rotating twin-screw extruder (screw diameter: 135 mm, L/D ratio: 30:1) equipped with a gravimetric feeder. The temperature profile was set between 60°C and 200°C, with a screw speed of 25-30 rpm. These processing conditions are exemplary and do not limit the scope of the invention.

The processing conditions, including screw speed and temperature profile, are selected to provide sufficient interaction time for the polyisobutylene (PIB) to encapsulate the inorganic filler particles, while avoiding thermal degradation of the polymer matrix.

Figure 1 shows the FT-IR spectrum of the filler material. Each peak corresponds to a fundamental vibration mode characteristic of a specific bond type and enables identification of functional groups.

Vibrations of metal-oxygen bonds were observed in the region of 450-1000 cm⁻¹, corresponding to silicate minerals. A distinctive feature of the spectrum is the prominent peak at 463.51 cm⁻¹, which exhibits strong absorption and low transmittance and corresponds to Si-O-Si bending, SiO₄ bending, and Si-O stretching vibrations. In addition, the peak at 1010.40 cm⁻¹, indicative of the symmetric Si-O stretching mode of talc, can be attributed to the overlap of symmetric and asymmetric Si-O stretching vibrations. Furthermore, the peak at 530.27 cm⁻¹ is associated with Mg-O vibrations, reflecting Mg-O-Si bending vibrations. These results support the presence of talc in the structure.

In the PE spectrum, asymmetric and symmetric stretching vibrations of C-H bonds were observed at 2916.05 cm⁻¹ and 2848.35 cm⁻¹, respectively, while CH₂ and CH₃ bending (scissoring) and rocking deformation vibrations were detected at 1409.32 cm⁻¹ and 712.03 cm⁻¹, respectively.

For the polyolefin elastomer (POE), absorption bands at 2916.05 cm⁻¹ and 2848.35 cm⁻¹ correspond to asymmetric and symmetric -CH₂ stretching vibrations, respectively. Additional characteristic peaks of POE in the FT-IR spectrum were identified at 871.48 cm⁻¹ corresponding to C-O-C stretching vibrations, and at 712.03 cm⁻¹, corresponding to -CH₂ rocking vibrations.

The peaks observed at 1409.32 cm⁻¹ and 871.48 cm⁻¹ indicate the presence of calcium carbonate (CaCO₃), as confirmed by EDX analysis. Bending vibrations of carbonate groups are observed at 712.03 cm⁻¹ and 871.48 cm⁻¹. Examination of the FT-IR spectrum further shows that the peaks at 712.03 cm⁻¹ and 871.48 cm⁻¹ correspond to the calcite phase.

Specifically, the peak at 712.03 cm⁻¹ corresponds to in-plane bending of O-C-O, while the peak at 871.48 cm⁻¹ corresponds to out-of-plane bending vibrations. These spectral features are consistent with the characteristic vibrations of calcite.

SEM-EDX analysis provides information on the structural and chemical state of the materials. It reveals data regarding the compositional components incorporated into the material structure. At a magnification of 20,000×, the filler material exhibits the main components of its composition, namely calcite, talc, HDPE, and POE phases (Figure 2).

Calcite (CaCO₃) is observed in a cubic form. POE exhibits a porous structure, whereas HDPE displays a fibrous morphology. Talc appears more compact and plate-like compared to these materials. At standard magnification, the surface of the filler exhibits a smooth and flat microstructure.

The results of the EDX analysis provide an overview of the elemental distribution in the filler composition according to the invention. Figure 3 illustrates the elemental distribution on the surface of the filler. The elemental distribution indicates a uniform presence of the main constituent elements across the analyzed surface. The main elements, including C, N and O, as well as the composition of the materials used, are identified by EDX analysis.

In the analysis, the C kα signal at 0.276 keV, the O kα1 signal at 0.523 keV, and the N kα signal at 0.390 keV confirm the presence of carbon (C), oxygen (O), and nitrogen (N), respectively. Semi-quantitative results in terms of atomic percentages are presented in the table included in Figure 3.

### Industrial Applicability

The filler material according to the invention can be readily used in the production of corrugated pipes, which are among the most widely used types of plastic pipes. As evidence, accredited test results were obtained both for the filler material and for a double-walled corrugated pipe having a diameter of Ø200 mm and SN8 class, produced with yellow-colored inner walls in which the filler material according to the invention was used.

Double-wall corrugated pipes having a nominal diameter of 200 mm, and SN8 class were manufactured using a co-extrusion corrugated molding system. The inner wall was extruded from 73 wt.%, neat HDPE (MFI: 0.26 g/10 min, density: 0.958 g/cm³), 25 wt.%, filler masterbatch compound and 2 wt.% yellow colorant, and the outer wall from 50 wt.%, neat HDPE (MFI: 0.26 g/10 min, density: 0.958 g/cm³), 48 wt.%, filler masterbatch compound and 2 wt.% black colorant. A dosing system was employed to feed both the main and co-extruders.

The melt temperature was maintained between 190°C-195°C, and vacuum-assisted forming ensured dimensional accuracy. The pipes were produced in accordance with TS EN 13476-3.

Double-wall corrugated pipes were produced using a co-extrusion line equipped with two single-screw extruders: a main extruder (outer wall) having a screw diameter of 60 mm, and an L/D ratio 36:1, and a co-extruder (inner wall) having a screw diameter of 60 mm, and an L/D ratio 36:1, with corrugator speed 1.5 m/min.

Both extruders were controlled independently with temperature zones as follows: for the main extruder, 80°C-190°C with a screw speed of 65 rpm, and for the co-extruder 80°C-185°C with a screw speed of 44 rpm.

Density determination (TS EN ISO 1183-1:2019), volatile matter content determination (TS EN ISO 12099), MFI testing (TS EN ISO 1133-1), and ash content determination (TS EN ISO 3451-1) were performed, and the test results confirmed the suitability of the material as a filler.

A double-walled corrugated pipe having a diameter of Ø200 mm and SN8 class was produced using the filler material. In the ring stiffness test, a value of 9.34 kN/m² was obtained, which exceeds the minimum requirement of 8 kN/m² defined by the applicable standard for pipes of this diameter. Furthermore, the potential disadvantage of increased brittleness due to higher stiffness was not observed in the ring flexibility test. On the contrary, the flexibility imparted by the polyolefin elastomer additive prevented any damage.

The single-screw extrusion speed was maintained, for example between 40-50 rpm to facilitate the exfoliation of talc layers, and ensure their uniform integration with the polyolefin elastomer (POE). This controlled shear rate prevents thermal degradation of the elastomer phase while achieving a level of dispersion essential for melt stabilization.

Another important parameter tested in the corrugated pipe samples was the melt flow index (MFI) values. The test results obtained from samples taken from the inner and outer walls were 0.73 g/10 min for the inner wall and 0.70 g/10 min for the outer wall. Since the required value range is between 0.20 g/10 min and 1.6 g/10 min, it was determined that the measured melt mass-flow rate, as influenced by the filler material, falls within the acceptable range defined by TS EN ISO 1133-1.

Density determination is another critical parameter for the produced pipes. In plastic-based pipes, filler materials generally increase density. However, in the corrugated pipe produced with the filler material according to the invention, the measured density values were 1.012 g/cm³ for the inner wall and 1.056 g/cm³ for the outer wall. Considering that typical application specifications require a density of approximately 1 g/cm³, it has been demonstrated that the filler meets the required specifications.

The OIT (oxygen induction time) was determined as 26 minutes for the inner wall and 68 minutes for the outer wall. Considering that the minimum OIT value for PE pipe compounds is 20 minutes as per the applicable PE material standards, the suitability of the filler material has been confirmed.

According to the inspection and test report issued by the Chemistry Laboratory of the Turkish Standards Institute (TSE) Testing and Calibration Center, corrugated pipes having a diameter of Ø200 mm and SN8 class, produced using the filler material, exhibited an average MFI of 0.55 g/10 min, an average density of 1.013 g/cm³, and thermal stability exceeding 10 minutes. The average SN value was 12.605 kN/m². The pipes also received a 'pass' result in the ring flexibility tests. The results are presented in Table 2.

The accredited test results demonstrate that the filler material exhibits industrial applicability and that the produced plastic pipes meet the performance requirements defined in the relevant standards.

The filler material can also be used in the production of PVC, PP-R, and other infrastructure and superstructure plastic pipes. It is suitable for use in a wide range of polymer processing applications, including thermoplastic, thermoset and elastomer-based systems. Owing to its fundamental properties, the application areas of the material can be adapted to different industries and modified according to emerging needs. It is suitable for use as a filler in sectors such as construction, automotive and packaging.

**Table 2. Test Results according to the report issued by the Chemistry Laboratory of the Turkish Standards Institute (TSE) Testing and Calibration Center**

| **Test Name** | **Test Standard** | **Requirement** | **Test Result** |
|---|---|---|---|
| Density | TS EN ISO 1183-1 | ≥930 kg/m³ | 1013 kg/m³ |
| MFI | TS EN ISO 1133-1 | ≤1.6 g/10min | 0.55 g/10min |
| OIT | TS EN ISO 11357-6 | ≥10 min | >20 min |
| Impact Resistance | TS EN ISO 3127 | TIR≤10% | TIR=0% |
| Ring Stiffness | TS EN ISO 9969 | ≥SN8 | >SN8 |
| | | | S_{avg}: 12.605 kN/m² |
| Ring Flexibility | TS EN ISO 13968 | shall conform to section 9.1.2 (TS EN 13476-3) | PASSED |

## Claims

1. A filler material for use in polymer-based products, **characterized in that** the filler material comprises:
a) Calcium Carbonate (CaCO₃) in an amount of 30%-70% by weight,
b) Talc (Mg₃Si₄O₁₀(OH)₂) in an amount of 10%-40% by weight,
c) Polyethylene (PE) as a carrier matrix in an amount of 10%-30% by weight,
d) Polyolefin Elastomer (POE) as an impact modifier in an amount of 0.1%-10% by weight,
e) Lubricants in an amount of 0.1%-3% by weight, comprising erucamide as an internal lubricant and a mixture of polyethylene wax and montan wax as external lubricants, and
f) Polyisobutylene (PIB) as an auxiliary processing oil in the amount of 0.1%-3% by weight;
wherein the polyethylene (PE) carrier matrix and the montan wax are thermodynamically incompatible such that the montan wax migrates to interfaces of the inorganic components (a) and (b) to provide a steric hindrance that balances the tackiness of the polyisobutylene (PIB) and ensures homogeneous dispersion,
wherein the filler material is in a solid granular form, and
wherein the total amount of components (a) to (f) is 100% by weight, the components being homogeneously dispersed.

2. The filler material according to Claim 1, **characterized in that** the polyolefin elastomer (POE), when dispersed within the filler material, enhances the ductility of the matrix by dissipating mechanical energy, thereby improving impact resistance and flexibility of the final polymer-based product.

3. The filler material according to Claim 1 or Claim 2, **characterized in that** the carrier matrix is selected from high-density polyethylene (HDPE), linear low-density polyethylene (LLDPE), or low-density polyethylene (LDPE).

4. The filler material according to any one of the preceding claims, **characterized in that** the erucamide component of the lubricants (e) is a fatty acid primary amide which acts as a slip agent by reducing the coefficient of friction at the polymer surface and as an internal lubricant to facilitate melt flow.

5. The filler material according to any one of the preceding claims, **characterized in that** the external lubricant comprises a mixture of polyethylene wax (PE wax) and montan wax, wherein said montan wax is esterified and has an acid value of less than 15 mg KOH/g.

6. The filler material according to any one of the preceding claims, **characterized in that** the polyisobutylene (PIB) forms a viscoelastic structure around the inorganic filler particles to toughen the matrix, while the migrated montan wax prevents agglomeration of said particles.

7. A method for manufacturing the filler material according to Claim 1, **characterized in that** the method comprises the steps of:
(i) pre-mixing components (a) to (f);
(ii) compounding the mixture in a twin-screw extruder at a screw speed of 25-30 rpm, wherein the processing conditions provide sufficient residence time for the polyisobutylene (PIB) to encapsulate the inorganic fillers without degrading the polymer chains; and
(iii) maintaining a graduated temperature profile from 60°C to 200°C, which serves as a thermodynamic driver to initiate the phase separation of the montan wax from the polyethylene matrix and facilitates its migration to the inorganic filler interfaces.

8. The filler material according to any one of claims 1 to 6, **characterized in that** the filler material is provided in a solid granular form suitable for direct use in single-screw extrusion of polyethylene, thereby reducing or preventing melt fracture and shark-skin surface defects without requiring secondary compounding.

9. The filler material according to Claim 1, **characterized in that** the talc-POE ratio is in the range of 2:1 to 4:1, thereby reducing die-head pressure and improving surface quality and mechanical properties.
